# NEUE EUROPÄISCHE PATENTSCHRIFT

(11) **EP 0 360 779 B2**
(45) Veröffentlichungstag und Bekanntmachung des Hinweises auf die Entscheidung über den Einspruch: **11.02.1998**
(45) Hinweis auf die Patenterteilung: 13.10.1993
(21) Anmeldenummer: 89890200.2
(22) Anmeldetag: 28.07.1989
(51) Int. Cl.: H02K 7/102

(54) **Vorrichtung zum Abbremsen von Elektromotoren**
Device for braking electric motors
Dispositif de freinage de moteurs électriques

(30) Priorität: 21.09.1988 AT 2318/88
(43) Veröffentlichungstag der Anmeldung: 28.03.1990
(73) Patentinhaber: AUSTRIA Antriebstechnik G. Bauknecht Aktiengesellschaft, 8740 Zeltweg-Spielberg (Steiermark) (AT)
(72) Erfinder: Egger, Otto, A-8911 Admont (AT)
(74) Vertreter: Beer, Manfred, Dipl.-Ing.

(56) Entgegenhaltungen:
- EP-A- 0 136 282
- DE-U- 8 716 775
- FR-A- 2 560 722
- JP-U- 5 595 458
- US-A- 3 032 667

## Beschreibung

Die Erfindung betrifft eine Vorrichtung zum Abbremsen von Elektromotoren mit Kurzschlußläufern, mit den Merkmalen des einleitenden Teils von Anspruch 1.

Eine derartige Vorrichtung zum Abbbremsen von Elektromotoren ist aus der EP-B1 136 282 bekannt. Die in dieser Patentschrift beschriebene Vorrichtung verwendet vorzugsweise Bremskörper aus tiefgezogenem Blech.

Diese tiefgezogenen Teile haben jedoch den Nachteil, daß ihre Ränder durch den Tiefziehvorgang sehr ungleichmäßig geformt sind. Wenn der Bremskörper nun mit seinem unbearbeiteten Rand am Kurzschlußring anliegt, beginnt er in Betrieb durch seine nicht genau definierte Auflagefläche zu flattern, was zu einer unangenehmen Lärmentwicklung führt.

Diese, die Berührungsflächen bildenden Ränder müssen daher nachbearbeitet werden, was umständlich und kostenaufwendig ist. Meist muß auch eine entsprechende Anlagefläche am Kurzschlußläufer angearbeitet werden.

Aus der US-PS 3 032 667 ist ein Bremskörper bekannt, der gegossen oder spanabhebend hergestellt sein kann. Der Bremskörper ist über einen rohrförmigen Teil auf der Rotorwelle geführt und liegt über ein Ende des rohrförmigen Teiles am Rotor an.

Aufgabe der Erfindung ist es, eine Vorrichtung der eingangs genannten Art so weiterzuentwickeln, daß die genannten Nachteile bei im Tiefziehverfahren hergestellten Bremskörpern auf einfache Weise vermieden werden.

Erfindungsgemäß wird dies mit den Merkmalen des kennzeichnenden Teils von Anspruch 1 erreicht.

Durch die erfindungsgemäße Anordnung dieser Hülse am Bremskörper wird eine einfach herzustellende, genau bestimmte Anlagefläche des Bremskörpers am Rotorpaket geschaffen.

Das umständliche und kostenaufwendige Nachbearbeiten des Randes des Bremskörpers ist daher nicht mehr erforderlich

Weitere Vorteile, die sich durch die Anordnung der Hülse ergeben, sind die genaue Führung der Feder in der Hülse und eine Stützwirkung für die Vorsprünge des Bremskörpers.

Eine einfache Form der Führung und Abstützung der Feder gegen den Bremskörper ergibt sich dadurch, daß am Boden des Bremskörpers ein radial innerhalb der Hülse liegender kreisringförmiger Ansatz gebildet ist, gegen dessen zum Kurzschlußläufer hinweisende Fläche sich die Feder abstützt.

Eine sehr einfache und feste Befestigungsmöglichkeit der Hülse am Bremskörper ergibt sich dadurch, daß die Hülse durch Schweißen am Boden des Bremskörpers befestigt ist.

Die weiteren Unteransprüche betreffen bevorzugte Ausführungsformen der Erfindung.

Weitere Einzelheiten und Merkmale der Erfindung ergeben sich aus der nachstehenden Beschreibung des in den Zeichnungen wiedergegebenen Ausführungsbeispieles.

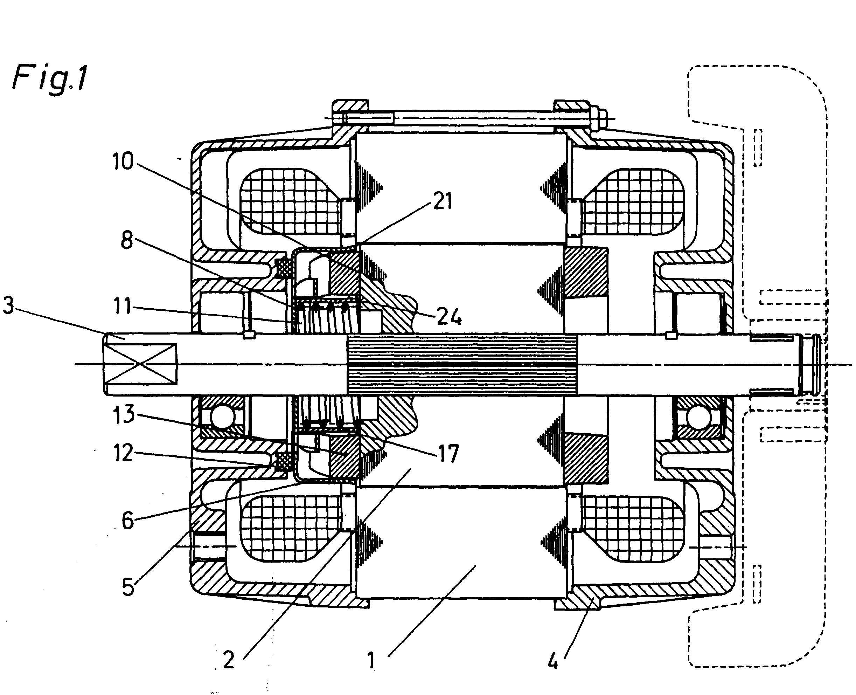

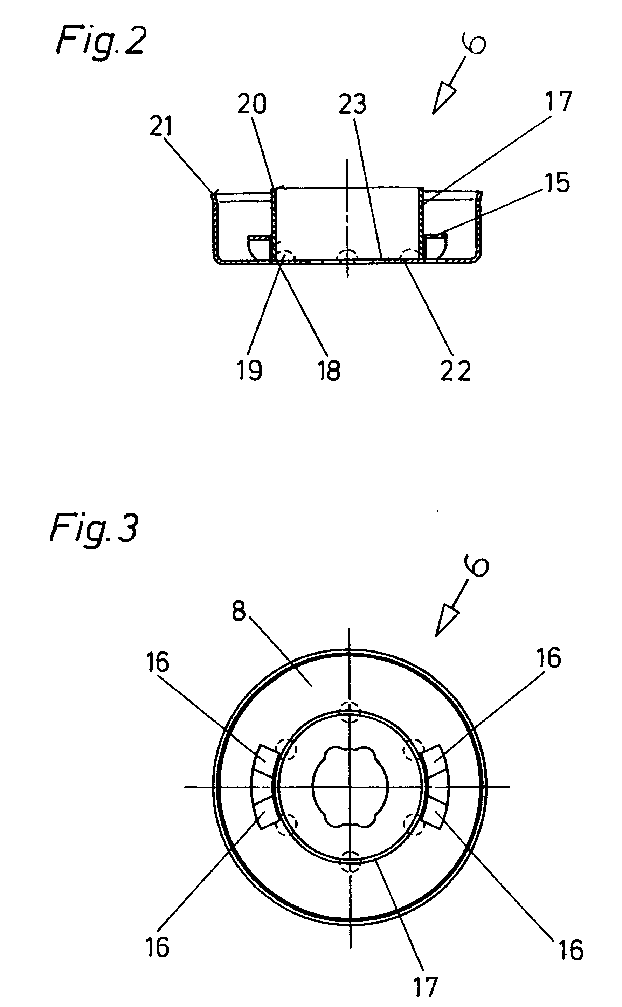

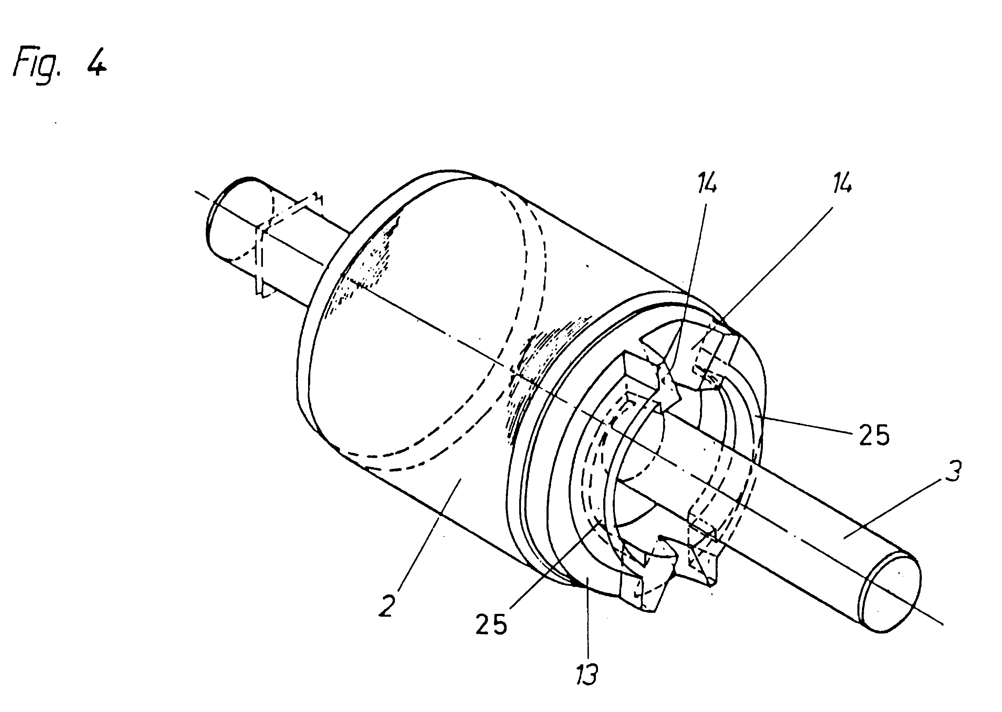

Es zeigt Fig. 1 im Schnitt einen mit der erfindungsgemässen Vorrichtung ausgerüsteten, asynchronen Motor mit Kurzschlußläufer, Fig. 2 und Fig. 3 ein Ausführungsbeispiel des Bremskörpers und Fig. 4 den Kurzschlußläufer des Motors aus Fig. 1 in Schrägansicht.

Der in Fig. 1 gezeigte Asynchronkurzschlußläufermotor besteht aus einem Stator 1 und einem Kurzschlußläufer 2 mit einem Kurzschlußring 13, dessen Welle 3 in Lagerschilden 4 und 5 drehbar gelagert ist.

Über das in Fig. 1 linke Ende der Welle 3 ist ein Bremskörper 6 gesteckt. Im im wesentlichen ringförmigen Bremskörper 6 ist eine Hülse 17 angeordnet, die z.B. durch Schweißnähte 19 am Boden 8 des Bremskörpers 6 befestigt ist. Die Hülse 17 liegt vorteilhafterweise an den radial nach innen weisenden Flächen 18 der Vorsprünge 15 an. Es kann aber auch zwischen der Fläche 18 der Vorsprünge 15 und der Hülse 17 - wie in den Zeichnungen dargestellt - ein kleiner Spalt sein. Am Boden 8 des Bremskörpers 6 weist von der Hülse 17 ein kreisringförmiger Ansatz 22 nach innen, gegen dessen Fläche 23 sich die Feder 11 abstützt. Gleichzeitig wird die Feder 11 durch die Innenfläche der Hülse 17 geführt.

Mit seiner in einer Normalebene zur Drehachse des Kurzschlußläufers 2 liegenden Stirnfläche 20 der Hülse 17 stützt sich der Bremskörper 6 gegen eine innerhalb des Kurzschlußringes 13 am Kurzschlußläufer 2 angeordnete, normal zur Drehachse des Kurzschlußläufers 2 liegende Fläche 24 ab, wenn der Bremskörper 6 durch das Magnetfeld gegen den Kurzschlußläufer 2 gezogen wird. Das unbearbeitete Ende 21 des Bremskörpers 6 liegt dadurch frei und es kommt zu keiner Berührung des Endes 21 mit anderen Teilen des Motors. Beim Abschalten des Motors oder bei einem Ausfall der Stromversorgung bricht das Magnetfeld zusammen und der Bremskörper 6 wird von der Feder 11 gegen den im Lagerschild 5 dargestellten Bremsbelag 12 gedrückt. Durch die Hülse 17 ergibt sich weiters eine gute axiale Führung des Bremskörpers 6 im Kurzschlußring 13 des Rotors 2.

Zur Erhöhung der Festigkeit der die Keilflächen 14 tragenden Ansätze sind bei dem in Fig. 4 gezeigten Kurzschlußläufer 2 am Kurzschlußring 13 Rippen 25 angeordnet, gegen die sich die Ansätze abstützen. Im gezeigten Ausführungsbeispiel (Fig. 4) sind die Rippen teilringförmig und mit den Ansätzen am Kurzschlußring einstückig ausgebildet.

## Patentansprüche

1. Vorrichtung zum Abbremsen von Elektromotoren mit Kurzschlußläufern (2), mit einem im Tiefziehverfahren hergestellten, im wesentlichen topfförmigen Bremskörper (6), dessen freier Rand (21) zum Kurzschlußring (13) des Kurzschlußläufers (2) hinweist, der wenigstens teilweise aus weichmagnetischem Werkstoff besteht und der an zum Kurzschlußring (13) hinragenden Vorsprüngen (15) je mindestens eine Schrägfläche (16) aufweist, die am Kurzschlußring (13) des Kurzschlußläufers (2) angeordneten Vorsprüngen zugekehrt sind, welche Vorsprünge je eine Keilfläche (14) aufweisen, die zur Achse des Kurzschlußläufers (2) in der gleichen Schräglage wie die Schrägfläche (16) am Bremskörper (6) ausgerichtet ist, wobei zwischen dem Bremskörper (6) und einem gehäusefesten Bauteil (5) des Elektromotors ein Bremsbelag (12) und zwischen dem Bremskörper (6) und dem Kurzschlußläufer (2) eine den Bremskörper (6) gegen den Bremsbelag (12) drückende Feder (11) angeordnet ist, dadurch gekennzeichnet, daß am topfförmigen Bremskörper (6) eine zum Kurzschlußläufer (2) hin weisende, zylinderförmige, zum topfförmigen Bremskörper (6) koaxial angeordnete Hülse (17) befestigt ist, die an der radial innen liegenden Seite der Vorsprünge (15) anliegt, daß die Hülse (17) in der vom Magnetfeld zum Kurzschlußläufer (2) hin gezogenen Stellung des Bremskörpers (6) mit ihrer zum Kurzschlußläufer (2) hin weisenden Fläche (20) am Rotorpaket stirnseitig anliegt, und daß der freie Rand (21) des Bremskörpers (6) in dessen zum Kurzschlußläufer (2) hin gezogenen Stellung frei liegt und keine Teile des Motors berührt.

2. Vorrichtung nach Anspruch 1, dadurch gekennzeichnet, daß am Boden (8) des Bremskörpers (6) ein radial innerhalb der Hülse (17) liegender kreisringförmiger Ansatz (22) gebildet ist, gegen dessen zum Kurzschlußläufer (2) hin weisende Fläche (23) sich die Feder (11) abstützt.

3. Vorrichtung nach Anspruch 1 oder 2, dadurch gekennzeichnet, daß sich die Feder (11) gegen eine normal zur Drehachse des Kurzschlußläufers (2) liegende, zum Bremskörper (6) hin weisende, innerhalb des Kurzschlußringes (13) am Kurzschlußläufer (2) angeordnete Fläche (24) abstützt.

4. Vorrichtung nach einem der Ansprüche 1 bis 3, dadurch gekennzeichnet, daß die Hülse (17) durch Schweißen am Boden (8) des Bremskörpers (6) befestigt ist.

5. Vorrichtung nach einem der Ansprüche 1 bis 4, dadurch gekennzeichnet, daß am Kurzschlußring (13) teilringförmige Rippen (25) vorgesehen sind, die zwischen den die Keilflächen (14) aufweisenden Vorsprüngen angeordnet sind.

6. Vorrichtung nach Anspruch 5, dadurch gekennzeichnet, daß die Rippe (25) mit den Vorsprüngen einstückig ausgebildet ist.

## Claims

1. A device for braking electric motors with squirrel-cage rotors (2), with a substantially pot-shaped brake body (6) formed by deep drawing, whose free edge (21) faces towards the short-circuit ring (13) of the squirrel-cage rotor (2), which consists at least partially of magnetically soft material and which comprises at least one bevelled surface (16) each on projections (15) projecting towards the short-circuit ring (13), which face projections arranged on the short-circuit ring (13) of the squirrel-cage rotor (2), which projections each have a wedge surface (14) which is aligned relative to the axis ofthe squirrel-cage rotor (2) in the same oblique position as the bevelled surface (16) on the brake body (6), wherein a brake lining (12) is arranged between the brake body (6) and a component (5) fixed relative to the housing of the electric motor and a spring (11) biasing the brake body (6) against the brake lining (12) is arranged between the brake body (6) and the squirrel-cage rotor (2), characterized in that a cylindrical sleeve (17) coaxially arranged with the pot-shaped body (6) and facing towards the squirrel-cage rotor (2) is fixed on the pot-shaped brake body (6) and bears on the radially inner side of the projections (15), in that the sleeve (17) bears with its surface (20) facing towards the squirrel-cage rotor (2) endwise on the rotor pack when the brake body (6) is pulled in by the magnetic field towards the squirrel-cage rotor (2), and in that the free edge (21) of the brake body (6) is free and contacts no part of the motor in its position pulled in towards the squirrel-cage rotor (2).

2. A device according to claim 1, characterized in that an annular extension (22) is formed on the bottom (8) of the brake body (6), lying radially inside the sleeve (17) and against whose surface facing towards the squirrel-cage rotor (2) the spring (11) bears.

3. A device according to claim 1 or 2, characterized in that the spring (11) bears against a surface (24) arranged on the squirrel-cage rotor (2), lying normal to the axis of rotation of the squirrel-cage rotor (2), facing towards the brake body (6), within the short-circuit ring (13).

4. A device according to any of claims I to 3, characterized in that the sleeve (17) is fixed to the bottom (8) of the brake body (6) by welding.

5. A device according to any of claims 1 to 4, characterized in that part-annular ribs (25) are provided on the short-circuit ring (13) and are arranged between the projections with the wedge surfaces (14).

6. A device according to claim 5, characterized in that the rib (25) is formed in one piece with the projections.

## Revendications

1. Dispositif de freinage de moteurs électriques avec rotor en court-circuit (2), comportant un corps de frein (6) fabriqué par emboutissage, essentiellement en forme de pot, dont le bord libre (21) est tourné vers la bague en court-circuit (13) du rotor en court-circuit (2), qui est au moins partiellement en matériau magnétique doux et qui présente respectivement au moins une surface inclinée (16) sur des saillies (15) tournées vers la bague en court-circuit (13), qui sont tournées vers des saillies prévues sur la bague en court-circuit (13) du rotor en court-circuit (2), ces saillies présentant chacune une surface en coin (14) qui est dirigée vers l'axe du rotor en court-circuit (2) dans la même position inclinée que la surface inclinée (16) sur le corps de frein (6), entre le corps de frein (6) et un élément fixe du boîtier (5) du moteur électrique, étant prévue une garniture de frein (12) et, entre le corps de frein (6) et le rotor en court-circuit (2), étant prévu un ressort (11) poussant le corps de frein (6) contre la garniture de frein (12), caractérisé en ce que, sur le corps de frein (6) en forme de pot, est fixé un tube cylindrique (17) disposé coaxial au corps de frein (6) en forme de pot, tourné vers le rotor en court-circuit (2), qui est collé à la face radiale interne des saillies (15), en ce que le tube (17), dans la position du corps de frein (6) attiré par le champ magnétique vers le rotor en court-circuit (2), colle, avec sa face (20) tournée vers le rotor en court-circuit (2), à la face frontale de l'ensemble du rotor (2), et en ce que le bord libre (21) du corps de frein (6) est libre dans sa position tirée vers l'intérieur vers le rotor en court-circuit (2) et ne touche aucune partie du moteur.

2. Dispositif suivant la revendication 1, caractérisé en ce que, sur le fond (8) du corps de frein (6), est prévu une embase circulaire (22) qui se trouve radialement à l'intérieur du tube (17) et sur laquelle sur la face (23) tournée vers le rotor en court-circuit (2) le ressort (11) s'appuie.

3. Dispositif suivant la revendication 1 ou 2, caractérisé en ce que le ressort (11) s'appuie contre une surface (24) qui est disposée sur le rotor en court-circuit (2), à l'intérieur de la bague en court-circuit (13), qui se trouve dans un plan perpendiculaire à l'axe de rotation du rotor en court-circuit (2) et qui est tournée vers le corps de frein (6).

4. Dispositif suivant l'une des revendications 1 à 3, caractérisé en ce que le tube (17) est fixé par soudure sur le fond (8) du corps de frein (6).

5. Dispositif suivant l'une des revendications 1 à 4, caractérisé en ce que, sur la bague en court-circuit (13), sont prévues des nervures (25) en forme de portion d'anneau, disposées entre les saillies présentant les surfaces en coin (14).

6. Dispositif suivant la revendication 5, caractérisé en ce que la nervure (25) forme une seule pièce avec les saillies.
